# EUROPEAN PATENT APPLICATION

(11) **EP 4 726 985 A1**
(43) Date of publication of application: **15.04.2026**
(21) Application number: 25162935.8
(22) Date of filing: 11.03.2025
(51) Int. Cl.: H02M 1/10, H02M 1/38, H02M 3/00, H02M 3/335

(54) **RESONANT CONVERTER AND CONTROL METHOD THEREOF**

(30) Priority: 14.10.2024 CN 202411432668
(71) Applicant: Delta Electronics, Inc., Taoyuan City 33370 (TW)
(72) Inventor: Lee, Ming-Hsueh, 32063 Taoyuan City (TW)
(74) Representative: Uexküll & Stolberg

(57) **Abstract**

A resonant converter (1) is provided. The detection circuit (7) detects the voltage and/or the current of the output terminal (Vo, VoL). The controller (8) controls the startup frequency of the two first switches (Q1, Q2) and the two second switches (Q3, Q4) according to the voltage and/or the current of the output terminal (Vo, VoL) detected by the detection circuit (7). The soft startup procedure is executed. Consequently, the switching stress of the synchronous rectifier circuit (6) is reduced. The resonant converter (1) of the present disclosure has advantage of enhancing lifespan, enhancing efficiency and enhancing stability of the system.

## Description

### FIELD OF THE INVENTION

The present disclosure relates to a converter, and more particularly to a resonant converter and a control method of the resonant converter.

### BACKGROUND OF THE INVENTION

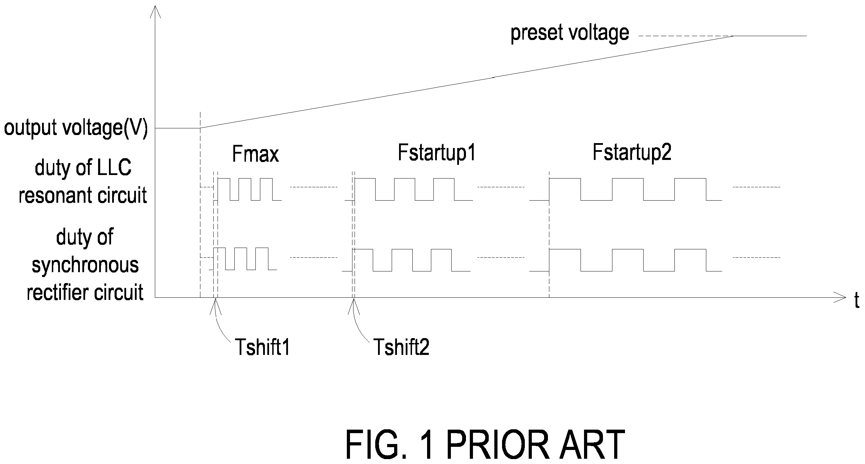

FIG. 1 shows sequence diagram of switching control signals of a resonant circuit and a synchronous rectifier circuit of a conventional resonant converter and an output voltage of the conventional resonant converter when a startup procedure of the conventional resonant converter is executed. As shown in FIG. 1, when the output voltage of the conventional resonant converter is enhanced from 0V, the frequency of the switching control signal is reduced from a maximum switching frequency Fmax to a first switching frequency Fstartup1. The time shift between the two switching control signals is reduced from a first time shift Tshift1 to a second time shift Tshift2. When the frequency of the switching control signal is reduced to a preset frequency, the time shift of the switches is reduced to 0, and the output voltage reaches a preset voltage.

However, when the conventional resonant converter is connected with the other power supplies in parallel to provide the power, the output terminal of the resonant converter has resident voltage for re-executing the soft startup procedure because of connection issue. When the output terminal of the conventional resonant converter has the resident voltage and the conventional resonant converter executes the soft startup procedure, the switching stress of the conventional resonant converter is enhanced.

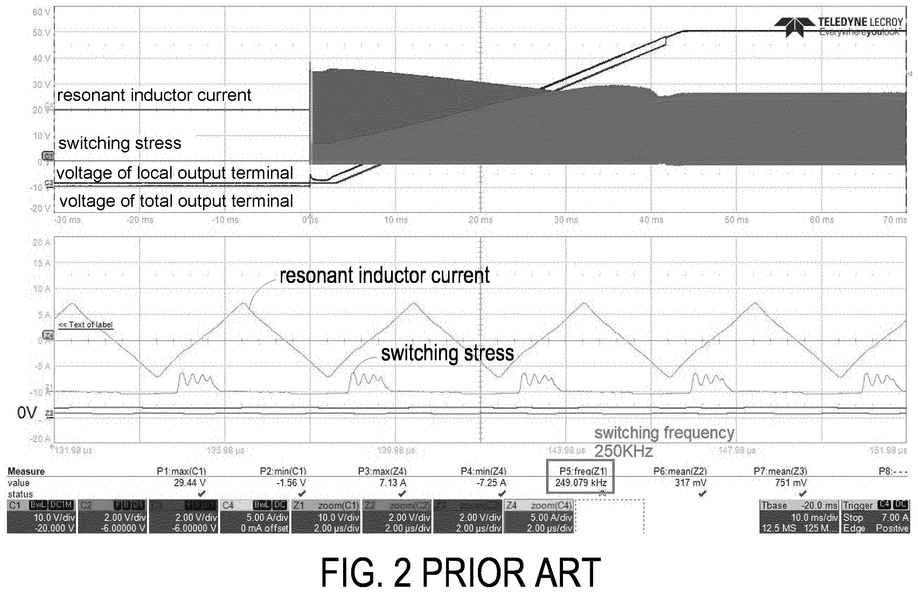

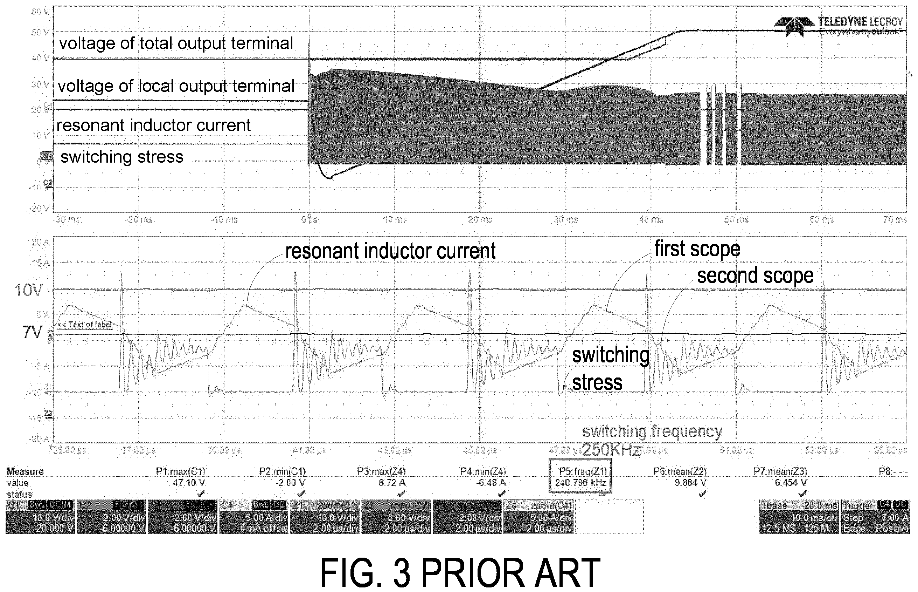

FIG. 2 shows sequence diagram of the resonant inductor current and the switching stress of the conventional resonant converter when the output terminal of the conventional resonant converter does not have the resident voltage and the soft startup procedure of the conventional resonant converter is executed. FIG. 3 shows sequence diagram of the resonant inductor current and the switching stress of the conventional resonant converter when the output terminal of the conventional resonant converter has the resident voltage and the soft startup procedure of the conventional resonant converter is executed. As shown in FIG. 2, when the output terminal of the resonant inductor converter does not have the resident voltage, the waveform of the resonant inductor is a triangle waveform. The voltage between the drain terminal and the source terminal of the switch is reduced. Namely, the switching stress is reduced. As shown in FIG. 3, when the output terminal of the resonant converter has the resident voltage, the waveform of the resonant inductor is an irregular waveform and has enhanced harmonic. The voltage between the drain terminal and the source terminal of the switch is enhanced. Namely, the switching stress is enhanced. Consequently, the high-voltage-tolerance circuit component is required. The conventional resonant converter has disadvantage of reducing lifespan, reducing efficiency and reducing stability of the system.

### SUMMARY OF THE INVENTION

The present disclosure provides a resonant converter and a control method of the resonant converter to obviate the drawbacks encountered from the prior arts.

In accordance with an aspect of the present disclosure, a resonant converter is provided. The resonant converter converts a power to a load. The resonant converter includes a transformer, a resonant circuit, a rectifier circuit, a detection circuit and a controller. The transformer includes a primary winding and two secondary windings. The resonant circuit includes two first switches connected in series. Two ends of the two first switches are connected with two ends of the primary winding, respectively. The rectifier circuit includes two second switches and an output terminal. The two second switches are connected in series with a connection node. Two ends of the two second switches are connected with two ends of the two secondary windings, respectively. The output terminal is connected with the connection node. The detection circuit is connected with the output terminal. The detection circuit is configured to detect at least one of a voltage and a current of the output terminal. The controller is connected with the detection circuit, the two first switches and the two second switches. The controller is configured to provide a plurality of switching control signals to the two first switches and the two second switches according to at least one of the voltage and the current. The controller is configured to set a startup frequency of the plurality of switching control signals to has inverse relationship with at least one of the voltage and the current of the output terminal. The controller is configured to control the plurality of switching control signals to be reduced from the startup frequency and control a time shift of the plurality of switching control signals to be reduced, and the voltage of the output terminal reaches a preset voltage.

In accordance with another aspect of the present disclosure, control method of a resonant converter is provided. The resonant converter includes a detection circuit, a controller, a transformer, a resonant circuit and a rectifier circuit. The transformer includes a primary winding and two secondary windings. The resonant circuit includes two first switches connected in series. The rectifier circuit includes two second switches connected in series and an output terminal. The control method includes the following steps. Firstly, the detection circuit detects at least one of a voltage and a current of the output terminal. Then, the controller provides a plurality of switching control signal to the two first switches and the two second switches according to at least one of the voltage and the current of the output terminal. Then, the controller sets a startup frequency of the plurality of switching control signals to has inverse relationship with at least one of the voltage and the current of the output terminal. Then, the controller controls the plurality of switching control signals to be reduced from the startup frequency and controls a time shift of the plurality of switching control signals to be reduced, and the voltage of the output terminal reaches a preset voltage.

The present disclosure provides a resonant converter. The resonant converter detects the voltage of the output terminal and/or the load state of the load to output a detection result. The startup frequency of the switching control signal of the soft startup procedure is controlled. Consequently, the resonant converter of the present disclosure has advantage of reducing switching stress, enhancing lifespan, enhancing efficiency and enhancing stability of the system.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 shows sequence diagram of switching control signals of a resonant circuit and a synchronous rectifier circuit of a conventional resonant converter and an output voltage of the conventional resonant converter when a startup procedure of the conventional resonant converter is executed;
FIG. 2 shows sequence diagram of the resonant inductor current and the switching stress of the conventional resonant converter when the output terminal of the conventional resonant converter does not have the resident voltage and the soft startup procedure of the conventional resonant converter is executed;
FIG. 3 shows sequence diagram of the resonant inductor current and the switching stress of the conventional resonant converter when the output terminal of the conventional resonant converter has the resident voltage and the soft startup procedure of the conventional resonant converter is executed;
FIG. 4 is a schematic circuit view illustrating a resonant converter according to an embodiment of the present disclosure;
FIG. 5 shows voltage of the output terminal and startup frequency of the switching control signal of an embodiment of the resonant converter of FIG. 4;
FIG. 6 shows sequence diagram of the switches of the resonant converter of FIG. 4;
FIG. 7 shows waveform diagram of the switching stress during the soft startup procedure of the resonant converter of FIG. 4; and
FIG. 8 shows comparison diagram of the startup frequency corresponding to the voltage of the output terminal and the load state of the load of an embodiment of the resonant converter of FIG. 4.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

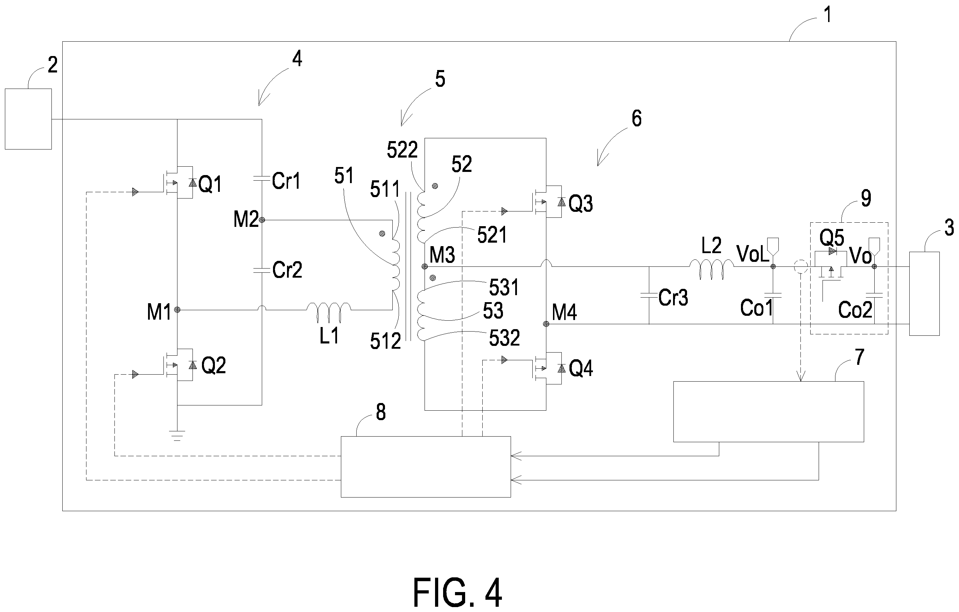

FIG. 4 is a schematic circuit view illustrating a resonant converter according to an embodiment of the present disclosure. As shown in FIG. 4, the resonant converter 1 of the present disclosure receives a power of a power source 2 and provides the power to a load 3. The resonant converter 1 includes a resonant circuit 4, a transformer 5, a rectifier circuit 6, a detection circuit 7 and a controller 8. The resonant circuit 4 is connected with the power source 2 and includes two first switches Q1, Q2, two first capacitor Cr1, Cr2 and a first inductor L1. The two first switches Q1, Q2 are served as an upper switch and a lower switch of a bridge arm. The two first switches Q1, Q2 are transistors or any other suitable circuit element and connected with each other in series with a first node M1. The first switch Q1 is connected with the power source 2. The two first capacitor Cr1, Cr2 are connected with the two first switches Q1, Q2 in parallel. The two first capacitor Cr1, Cr2 are connected with each other in series with a second node M2. An end of the first inductor L1 is connected with the first node M1.

The transformer 5 includes a primary winding 51, a first secondary winding 52 and a second secondary winding 53. A first end 511 of the primary winding 51 is connected with the second node M2. A second end 512 of the primary winding 51 is connected with the first node M1 through the first node M1. A first end 521 of the first secondary winding 52 is connected with a first end 531 of the second secondary winding 53 with a third node M3. In this embodiment, the second end 522 of the first secondary winding 52, the first end 531 of the second secondary winding 53 and the first end 511 of the primary winding 51 are common-polarity terminals.

The rectifier circuit 6 includes two second switches Q3, Q4, a second inductor L2, a second capacitor Cr3 and a first output capacitor Co1. The two second switches Q3, Q4 are served as an upper switch and a lower switch of a bridge arm. The two second switches Q3, Q4 are transistors or any other suitable circuit element and connected with each other in series with a fourth node M4. The two second switches Q3, Q4 are connected between the second end 522 of the first secondary winding 52 and the second end 532 of the second secondary winding 53. The second capacitor Cr3 is connected between the third node M3 and the fourth node M4. The second inductor L2 and the first output capacitor Co1 are connected between the third node M3 and the fourth node M4. The second inductor L2 and the first output capacitor Co1 are connected in series with a local output terminal VoL. Namely, the local output terminal VoL is connected with the third node M3 between the first end 521 of the first secondary winding 52 and the first end 531 of the second secondary winding 53. In this embodiment, the rectifier circuit 6 further includes a protection circuit 9 connected between the first output capacitor Co1 and the load 3 in parallel. The protection circuit 9 includes an output switch Q5 and a second output capacitor Co2. The output switch Q5 and the second output capacitor Co2 are connected between the local output terminal VoL and the fourth node M4 is series with a total output terminal Vo. Two ends of the second output capacitor Co2 are connected with the load 3. In this embodiment, the resonant converter 1 provides the power to the load 3 independently. In some embodiments, the resonant converter 1 is connected with the other N resonant converters in parallel with a busbar to provide the power to the load, wherein N is an integer greater than or equal to 1.

The detection circuit 7 is connected with the local output terminal VoL to detect the voltage and/or the current of the local output terminal VoL. The controller 8 is connected with the detection circuit 7, the two first switches Q1, Q2 and the two second switches Q3, Q4. The controller 8 provides a switching control signal to the two first switches Q1, Q2 and the two second switches Q3, Q4 according to the voltage and/or the current of the local output terminal VoL, and controls conduction frequency, conduction time and/or conduction state of the two first switches Q1, Q2 and the two second switches Q3, Q4. In this embodiment, the switching control signal of the controller 8 is a pulse width modulation signal. In other embodiments, the switching control signal of the controller 8 is a pulse frequency modulation signal, a pulse skip modulation signal or any suitable format signal. The controller 8 can be implemented by at least one of a microprocessor, a microcontroller or a digital signal processor.

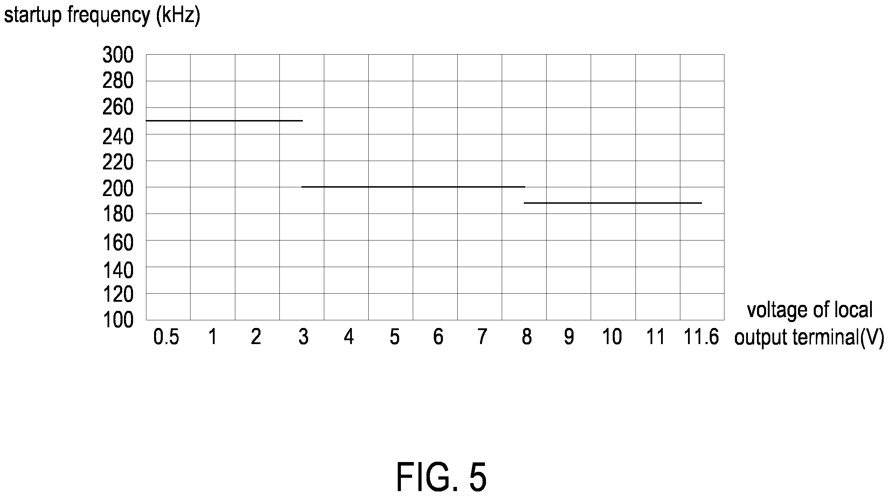

When resonant converter 1 executes a soft startup procedure, the controller 8 sets a startup frequency of the switching control signal according to the voltage and/or the current detected by the detection circuit 7. For example, when the detection circuit 7 detects the voltage of the local output terminal VoL ranged within a first voltage range, the controller 8 sets the startup frequency of the switching control signal to a first frequency, or when the detection circuit 7 detects the current of the local output terminal VoL ranged within a first current range, the controller 8 sets the startup frequency of the switching control signal to a first frequency. When the detection circuit 7 detects the voltage of the local output terminal VoL ranged within a second voltage range, the controller 8 sets the startup frequency of the switching control signal to a second frequency, or when the detection circuit 7 detects the current of the local output terminal VoL ranged within a second current range, the controller 8 sets the startup frequency of the switching control signal to a second frequency. The minimum value of the first voltage range is greater than or equal to the maximum value of the second voltage range, or the minimum value of the first current range is greater than or equal to the maximum value of the second current range. The first frequency is less than the second frequency. Namely, when the voltage of the local output terminal VoL is enhanced, the controller 8 sets the startup frequency of the switching control signal to be reduced. FIG. 5 shows voltage of the output terminal and startup frequency of the switching control signal of an embodiment of the resonant converter of FIG. 4. In this embodiment, as shown in FIGS. 4 and 5, the controller 8 sets the startup frequency of the switching control signal according to the range of the voltage of the local output terminal VoL detected by the detection circuit 7. When the voltage of the local output terminal VoL detected by the detection circuit 7 is less than 3V, the startup frequency of the switching control signal is set in 250kHz. When the voltage of the local output terminal VoL detected by the detection circuit 7 is ranged between 3V and 8V, the startup frequency of the switching control signal is set in 200kHz. When the voltage of the local output terminal VoL detected by the detection circuit 7 is greater than 8V, the startup frequency of the switching control signal is set in 190kHz. In other embodiments, the number of the voltage range is greater than two, and the controller 7 sets the startup frequency of the switching control signal accordingly. When the voltage of the local output terminal VoL detected by the detection circuit 7 is enhanced, the controller 8 sets the startup frequency of the switching control signal to be reduced.

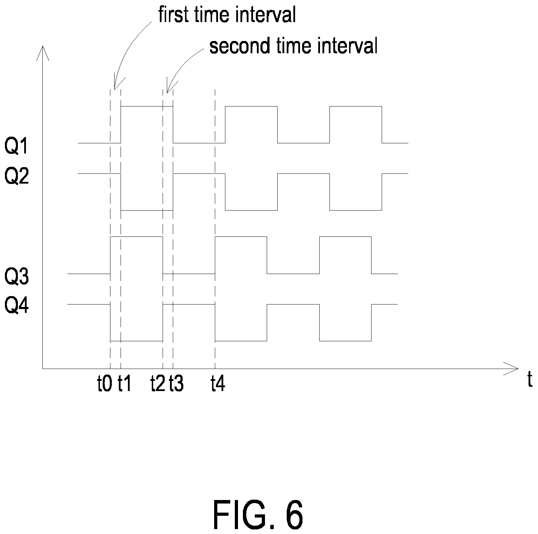

FIG. 6 shows sequence diagram of the switches of the resonant converter of FIG. 4. When the controller 8 sets the startup frequency of the switching control signal according to the voltage and/or the current detected by the detection circuit 7, the resonant converter 1 executes the soft startup procedure accordingly. As shown in FIG. 6, during the first time interval (i.e., the interval between t0 to t1), the controller 8 controls the second switch Q3 to turn on and the second switch Q4 to turn off at t0, and the first switch Q1 to turn on and the first switch Q2 to turn off at t1 in sequence according to the startup frequency of the switching control signal. The first switch Q2 and the second switch Q3 are in the on state and the first switch Q1 and the second switch Q4 are in the off state during the interval t0 to t1. Consequently, the first switch Q1 and the second switch Q3 are in the on state and the first switch Q2 and the second switch Q4 are in the off state between t1 and t2. During the second time interval (i.e., the interval between t2 to t3), the controller 8 controls the first switch Q2 and the second switch Q4 to turn on and the first switch Q1 and the second switch Q3 to turn off in sequence according to the startup frequency of the switching control signal. The first switch Q1 and the second switch Q4 are in the on state and the first switch Q2 and the second switch Q3 are in the off state during the interval t2 to t3. Consequently, the first switch Q1 and the second switch Q3 are in the off state between t3 and t4, and the first switch Q2 and the second switch Q4 are in the on state between t3 and t4. Then, the controller 8 controls the switching control signal to execute for a preset time with the startup frequency, or for satisfying a specific condition (e.g., the voltage and/or the current detected by the detection circuit 7 reaches the preset voltage and/or the preset current). The controller 8 controls the frequency of the switching control signal to reduce under the frequency of the startup frequency. The controller 8 reduces the time shift between the two switching control signals (e.g., the time shift between t0 to t1, or the time shift between t2 to t3), and the local output terminal VoL reaches the preset voltage.

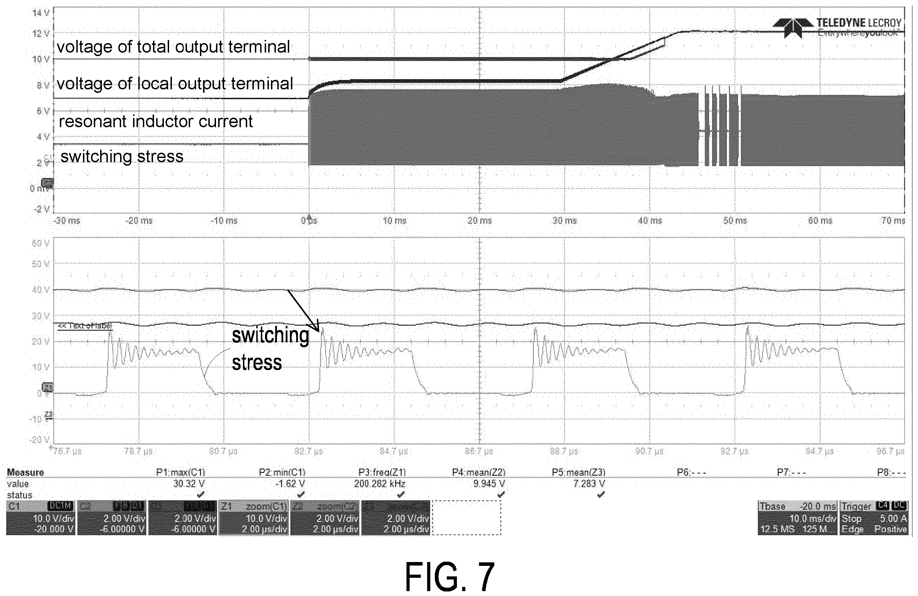

FIG. 7 shows waveform diagram of the switching stress during the soft startup procedure of the resonant converter of FIG. 4. In this embodiment, the switching stresses of switches Q3 and Q4 are shown in FIG. 7. As shown in FIG. 3, when the local output terminal VoL has resident voltage, the switching stress of the conventional resonant converter in 250kHz of the startup frequency is 48V As shown in FIG. 7, when the local output terminal VoL has resident voltage, the switching stress of the resonant converter 1 of this embodiment in 200kHz of the startup frequency is less than 30V, as shown in the arrow of FIG. 7. It is clear that the switching stress of the resonant converter 1 of the present disclosure is reduced.

In another embodiment, the detection circuit 7 further detects the current of the local output terminal VoL. For example, the resonant converter 1 includes a resistor disposed between the second inductor L2 and the output switch Q5. The detection circuit 7 detects the voltage of the resistor to serve as the current detection signal of the local output terminal VoL. The current detection signal estimates the load state of the load 3. The current detection signal is enhanced so as to enhance the load state of the load 3. The current detection signal is reduced so as to reduce the load state of the load 3. In an embodiment, the controller 8 sets the startup frequency of the switching control signal according to the voltage and the current of the local output terminal VoL detected by the detection circuit 7. The number of the voltage range can be greater than two, and the number of the current range can be greater than two. Consequently, the controller 8 sets the startup frequency of the switching control signal accordingly. When the voltage of the local output terminal VoL detected by the detection circuit 7 is enhanced, the corresponding startup frequency is reduced. When the current of the local output terminal VoL detected by the detection circuit 7 is enhanced, the corresponding startup frequency is reduced.

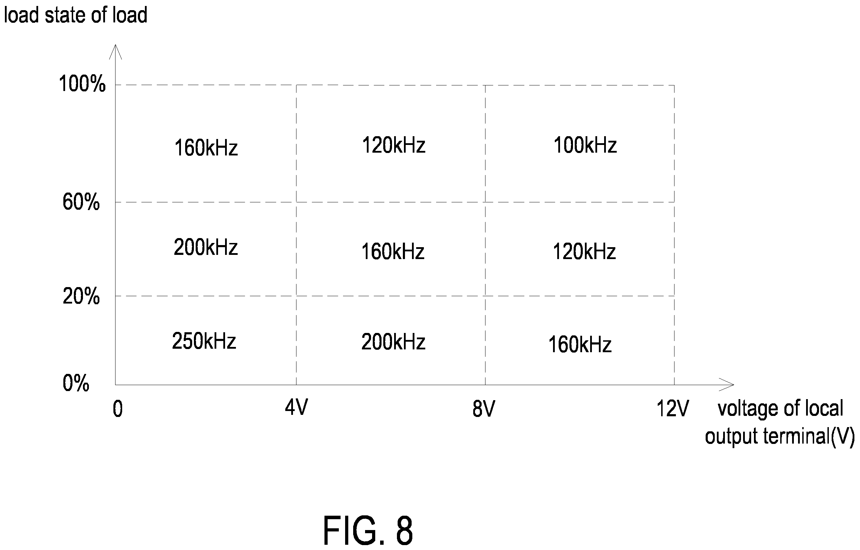

FIG. 8 shows comparison diagram of the startup frequency corresponding to the voltage of the output terminal and the load state of the load of an embodiment of the resonant converter of FIG. 4. As shown in IFG. 8, when the load state of the load 3 or the voltage of the local output terminal VoL is enhanced, the corresponding startup frequency is reduced. When the load state of the load 3 or the voltage of the local output terminal VoL is reduced, the corresponding startup frequency is enhanced. In an embodiment, the controller 8 executes the soft startup procedure with the corresponding startup frequency according to the load state of the load 3 and the voltage of the local output terminal VoL. For example, when the detection circuit detects that the load state of the load 3 is ranged between 30% and 60% and the voltage of the local output terminal VoL is ranged between 4V and 8V, the controller 8 executes the soft startup procedure with 160kHz of the startup frequency. Shortly, when the controller 8 executes the soft startup procedure, the startup frequency of the switching control signal is set to has inverse relationship with at least one of the voltage of the local output terminal VoL and the load state of the load 3. Namely, the startup frequency of the switching control signal has inverse relationship with at least one of the voltage and the current of the local output terminal VoL detected by the detection circuit 7. When the voltage of the local output terminal VoL detected by the detection circuit 7 is enhanced, the controller 8 sets the startup frequency of the switching control signal to be reduced. When the voltage of the local output terminal VoL detected by the detection circuit 7 is reduced, the controller 8 sets the startup frequency of the switching control signal to be enhanced. When the current of the local output terminal VoL detected by the detection circuit 7 is enhanced (i.e., the load state of the load 3 is enhanced), the controller 8 sets the startup frequency of the switching control signal to be reduced. When the current of the local output terminal VoL detected by the detection circuit 7 is reduced (i.e., the load state of the load 3 is reduced), the controller 8 sets the startup frequency of the switching control signal to be enhanced.

In other embodiment, the controller 8 sets the startup frequency of the switching control signal according to the current of the local output terminal VoL detected by the detection circuit 7 only. The control method is similar to the above control method, and is not redundantly described hereinafter.

In other embodiment, the protection circuit 9 of FIG. 4 can be omitted. Consequently, the first output capacitor Co1 is directly connected with the load 3.

As mentioned above, the present disclosure discloses a resonant converter. The detection circuit detects the voltage and/or the current of the output terminal. The controller controls the startup frequency of the two first switches and the two second switches according to the voltage and/or the current of the output terminal detected by the detection circuit. The soft startup procedure is executed. Consequently, the switching stress of the synchronous rectifier circuit is reduced. The switching stress of the conventional resonant converter is enhanced. Compared to the conventional resonant converter, the resonant converter of the present disclosure has advantage of enhancing lifespan, enhancing efficiency and enhancing stability of the system.

## Claims

1. A resonant converter (1) converting a power to a load (3), **characterized in that** the resonant converter (1) comprises:
a transformer (5) comprising a primary winding (51) and two secondary windings (52, 53);
a resonant circuit (4) comprising two first switches (Q1, Q2) connected in series, wherein two ends of the two first switches (Q1, Q2) are connected with two ends of the primary winding (51), respectively;
a rectifier circuit (6) comprising two second switches (Q3, Q4) and an output terminal (Vo, VoL), wherein the two second switches (Q3, Q4) are connected in series with a connection node, two ends of the two second switches (Q3, Q4) are connected with two ends of the two secondary windings (52, 53), respectively, and the output terminal (Vo, VoL) is connected with the connection node;
a detection circuit (7) connected with the output terminal (Vo, VoL) and configured to detect at least one of a voltage and a current of the output terminal (Vo, VoL); and
a controller (8) connected with the detection circuit (7), the two first switches (Q1, Q2) and the two second switches (Q3, Q4), wherein the controller (8) is configured to provide a plurality of switching control signals to the two first switches (Q1, Q2) and the two second switches (Q3, Q4) according to at least one of the voltage and the current;
wherein the controller (8) is configured to set a startup frequency of the plurality of switching control signals to has inverse relationship with at least one of the voltage and the current of the output terminal (Vo, VoL), the controller (8) is configured to control the plurality of switching control signals to be reduced from the startup frequency and control a time shift of the plurality of switching control signals to be reduced, and the voltage of the output terminal (Vo, VoL) reaches a preset voltage.

2. The resonant converter (1) according to claim 1, wherein when the detection circuit (7) detects the voltage of the output terminal (Vo, VoL) is in a first voltage range, the controller (8) sets the startup frequency of the plurality of switching control signals to a first frequency; when the detection circuit (7) detects the voltage of the output terminal (Vo, VoL) is in a second voltage range, the controller (8) sets the startup frequency of the plurality of switching control signals to a second frequency, wherein a minimum value of the first voltage range is greater than or equal to a maximum value of the second voltage range, and the first frequency is less than the second frequency.

3. The resonant converter (1) according to claim 1, wherein the resonant circuit (4) comprises the two first switches (Q1, Q2), two first capacitors (Cr1, Cr2) and a first inductor (L1), the two first switches (Q1, Q2) are connected in series with a first node (M1), the two first capacitors (Cr1, Cr2) are connected in series with a second node (M2), wherein the first node (M1) is connected with a first end (511) of the primary winding (51), and the second node (M2) is connected with a second end (512) of the primary winding (51) through the first inductor (L1).

4. The resonant converter (1) according to claim 1, wherein the two secondary windings comprises a first secondary winding (52) and a second secondary winding (53), the first secondary winding (52) and the second secondary winding (53) are connected with each other in series with a third node (M3), the rectifier circuit (6) comprises the two second switches (Q3, Q4), a second inductor (L2), a second capacitor (Cr3) and a first output capacitor (Co1), the two second switches (Q3, Q4) are connected between one end of the first secondary winding (52) and one end of the second secondary winding (53), the two second switches (Q3, Q4) are connected with a fourth node (M4), wherein the second capacitor (Cr3) is connected between the third node (M3) and the fourth node (M4), the second inductor (L2) and the first output capacitor (Co1) are connected in series and connected between the third node (M3) and the fourth node (M4), wherein the second inductor (L2) and the first output capacitor (Co1) are connected with the output terminal (Vo, VoL).

5. The resonant converter (1) according to claim 4, wherein the rectifier circuit (6) comprises a protection circuit (9), the protection circuit (9) is connected between the first output capacitor (Co1) and the load (3), the protection circuit (9) comprises an output switch (Q5) and a second output capacitor (Co2), the output switch (Q5) and the second output capacitor (Co2) are connected in series and connected between the output terminal (Vo, VoL) and the fourth node (M4).

6. The resonant converter (1) according to claim 5, wherein the resonant converter (1) comprises a resistor, the resistor is disposed between the second inductor (L2) and the output switch (Q5), the detection circuit (7) is configured to detect voltage of the resistor for estimating a load state of the load (3).

7. The resonant converter (1) according to claim 6, wherein when the detection circuit (7) detects that the load state of the load (3) is in a first state range, the controller (8) sets the startup frequency of the plurality of switching control signals to a third frequency, when the detection circuit (7) detects that the load state of the load (3) is in a second state range, the controller (8) sets the startup frequency of the plurality of switching control signals to a fourth frequency, wherein a minimum value of the first state range is greater than or equal to a maximum value of the second state range, and the third frequency is less than the fourth frequency.

8. The resonant converter (1) according to claim 1, wherein when the detection circuit (7) detects that the current of the output terminal (Vo, VoL) is ranged between a first current range, the controller (8) sets the startup frequency of the plurality of switching control signals to a first frequency, when the detection circuit (7) detects that the current of the output terminal (Vo, VoL) is ranged between a second current range, the controller (8) sets the startup frequency of the plurality of switching control signals to a second frequency, wherein a minimum value of the first current range is greater than or equal to a maximum value of the second current range, and the first frequency is less than the second frequency.

9. A control method of a resonant converter (1), the resonant converter (1) comprising a detection circuit (7), a controller (8), a transformer (5), a resonant circuit (4) and a rectifier circuit, the transformer (5) comprising a primary winding (51) and two secondary windings (52, 53), the resonant circuit (4) comprising two first switches (Q1, Q2) connected in series, the rectifier circuit (6) comprising two second switches (Q3, Q4) connected in series and an output terminal (Vo, VoL), **characterized in that** the control method comprises:
the detection circuit (7) detecting at least one of a voltage and a current of the output terminal (Vo, VoL);
the controller (8) providing a plurality of switching control signal to the two first switches (Q1, Q2) and the two second switches (Q3, Q4) according to at least one of the voltage and the current of the output terminal (Vo, VoL);
the controller (8) setting a startup frequency of the plurality of switching control signals to has inverse relationship with at least one of the voltage and the current of the output terminal (Vo, VoL); and
the controller (8) controlling the plurality of switching control signals to be reduced from the startup frequency and controlling a time shift of the plurality of switching control signals to be reduced, and the voltage of the output terminal (Vo, VoL) reaching a preset voltage.

10. The control method according to claim 9, wherein the control method comprises:
when the detection circuit (7) detecting the voltage of the output terminal (Vo, VoL) is in a first voltage range, the controller (8) setting the startup frequency of the plurality of switching control signals to a first frequency; when the detection circuit (7) detecting the voltage of the output terminal (Vo, VoL) is in a second voltage range, the controller (8) setting the startup frequency of the plurality of switching control signals to a second frequency, wherein a minimum value of the first voltage range is greater than or equal to a maximum value of the second voltage range, and the first frequency is less than the second frequency.

11. The control method according to claim 9, wherein the control method comprises:
wherein when the detection circuit (7) detecting that the current of the output terminal (Vo, VoL) is ranged between a first current range, the controller (8) setting the startup frequency of the plurality of switching control signals to a first frequency, when the detection circuit (7) detecting that the current of the output terminal (Vo, VoL) is ranged between a second current range, the controller (8) setting the startup frequency of the plurality of switching control signals to a second frequency, wherein a minimum value of the first current range is greater than or equal to a maximum value of the second current range, and the first frequency is less than the second frequency.
